# EUROPEAN PATENT SPECIFICATION

(11) **EP 4 670 911 B1**
(45) Date of publication and mention of the grant of the patent: **15.07.2026**
(21) Application number: 25178049.0
(22) Date of filing: 21.05.2025
(51) Int. Cl.: B24C 3/32, B08B 3/02, B22F 5/10, B22F 10/66, B24C 1/08, B33Y 40/20, B24C 1/10

(54) **CAVITATION PROCESSING METHOD**
KAVITATIONSBASIERTES VERARBEITUNGSVERFAHREN
PROCÉDÉ DE TRAITEMENT PAR CAVITATION

(30) Priority: 24.06.2024 JP 2024101269
(43) Date of publication of application: 31.12.2025
(73) Proprietor: Sugino Machine Limited, Namerikawa City, Toyama 936-8577 (JP)
(72) Inventor: GARCIA SEDANO, Ignacio, Namerikawa City, Toyama, 9368577 (JP)
(74) Representative: Global IP Europe Patentanwaltskanzlei

(56) References cited:
- EP-A1- 3 695 912
- JP-A- 2020 110 904
- US-A1- 2022 184 776

## Description

### BACKGROUND

### 1. Technical Field

The present invention relates to a cavitation processing method for performing cavitation processing on a workpiece.

### 2. Description of the Background

A cavitation surface processing method called cavitation abrasive surface finishing (CASF) is known in which a cavitation jet containing abrasives is used to smooth and peen a surface of the workpiece (US 2024/0001509 A1). A cavitation processing method according to the preamble of the appended claim 1 is known from EP 3 695 912 A1.

### BRIEF SUMMARY

According to the conventional cavitation processing method, an inside of a curved target hole cannot be ground in some cases.

An object of the present invention is to efficiently grind the inside of the target hole curved from an inlet to an outlet.

The present invention provides a cavitation processing method, including:
forming a workpiece by additive manufacturing, the workpiece having a target hole having a curved portion curved from an inlet to an outlet;
immersing the workpiece and a nozzle having an ejection port in processing liquid containing suspended abrasives;
ejecting a jet of the processing liquid containing cavities from the ejection port along an ejection axis, the ejection axis being a straight line extending from outside to inside of the target hole, the ejection axis being a straight line having a portion closer to the outlet side than the inlet of the target hole with respect to an inner side surface, the inner side surface being an inner peripheral surface of the curved portion among side surfaces of the target hole; and
performing cavitation processing on an inside of the target hole by the jet.

The workpiece is made of metal. The metal constituting the workpiece is, for example, a heat-resistant alloy, an aluminum alloy, a magnesium alloy, titanium, a titanium alloy, steel, or corrosion-resistant steel. The workpiece is, for example, a mechanical part, a medical device part, or a medical device. The mechanical part is, for example, a pipe, a valve, a pipe fitting, and an aerospace part. The medical device includes a surgical implant. An aerospace component includes an aircraft engine component and other aircraft components, a rocket engine component, a spacecraft component, a satellite component, and a rocket piping.

The target hole may be a through hole. The target hole may extend linearly from the inlet and have a curved portion on a back side thereof. The target hole may only have a curved portion.

The nozzle diameter is, for example, 0.5 mm to 3 mm. The ejection pressure of the jet is, for example, 10 MPa to 200 MPa.

Both the workpiece and the nozzle are immersed in the processing liquid stored in the tank. In the processing liquid, the jet of the processing liquid is ejected from the nozzle toward the workpiece. The processing liquid is, for example, water. The processing liquid may include a rust inhibitor.

The ejection axis may be in contact with an inner side surface of the curved portion. The ejection axis may intersect an outer side surface which is an outer peripheral side surface of the curved portion. The ejection axis may have a portion that passes in the vicinity of the inner side surface from the outer side surface of the curved portion. The ejection axis may extend along the inner side surface on the outlet side from the inlet side end of the curved portion. The ejection axis may extend along the inner side surface at the outlet side end of the curved portion.

The cavitation processing is performed on a part or the entire surface of the side surface of the target hole.

The abrasives are abrasive particles. Examples of the abrasives include ceramics, alumina, garnet, and zirconia.

The structure of the support structure is, for example, block support, adaptive cell support, rod support, line support, and tree support.

The jet may remove the support structure while smoothing the sides of the target holes being supported.

According to the present invention, it is possible to efficiently grind the inside of the target hole curved from the inlet to the outlet.

### BRIEF DESCRIPTION OF DRAWINGS

FIG. 1 is a cross-sectional view of a workpiece according to a first embodiment.
FIG. 2 is a top view of the workpiece according to the first embodiment.
FIG. 3 is an explanatory view of additive manufacturing of the workpiece according to the first embodiment.
FIG. 4 is a cavitation processing apparatus according to the first embodiment.
FIG. 5 is a cross-sectional view of a workpiece according to a second embodiment.

### DETAILED DESCRIPTION

### First Embodiment

In the cavitation processing method according to a first embodiment, a workpiece 10 is firstly shaped by additive manufacturing. Next, the workpiece 10 and a nozzle 102 are immersed in a processing liquid 105 in which abrasives 106 are suspended. Then, a support structure 26 is removed by cavitation processing.

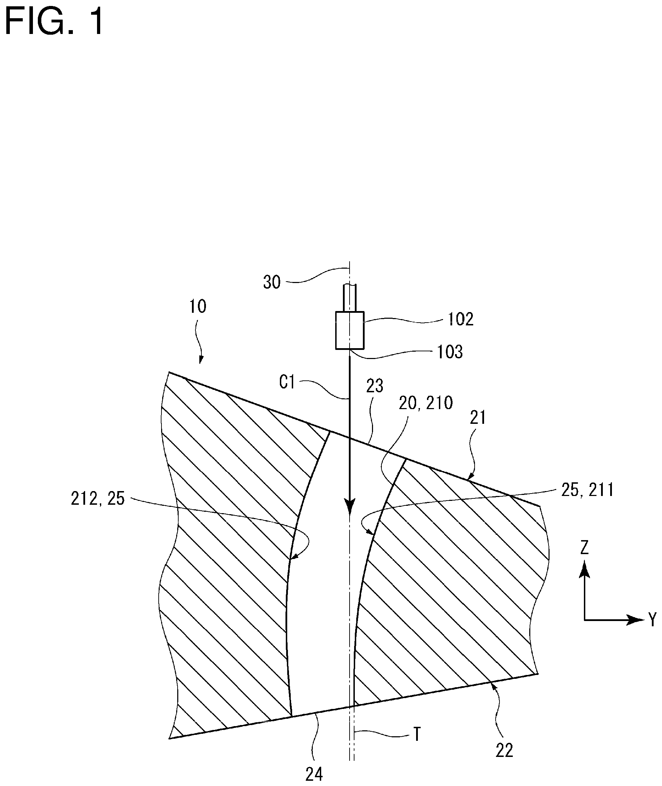

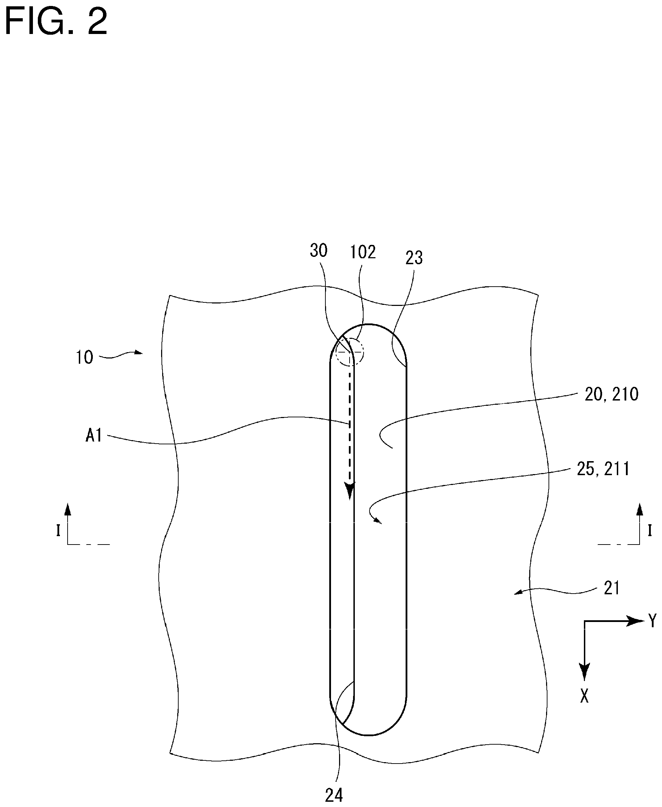

The workpiece 10 according to the present embodiment will be described with reference to FIGs. 1 and 2. FIG. 1 is a cross-sectional view taken along line I-I in FIG. 2. In FIGs. 1 and 2, an X direction and a Y direction are horizontal directions. A Z direction is a vertical direction. A description will be given based on a posture of the workpiece 10 when the cavitation processing is performed.

The workpiece 10 has an upper surface 21, a lower surface 22, and a single target hole 20. The upper surface 21 faces upwards. The lower surface 22 faces downward. The upper surface 21 and the lower surface 22 may be parallel to each other. The target hole 20 has an inlet 23, an outlet 24, and a side surface 25. The target hole 20 penetrates from the upper surface 21 to the lower surface 22. The inlet 23 is formed on the upper surface 21. The outlet 24 is formed on the lower surface 22. The outlet 24 is located on the back side with respect to the inlet 23. The side surface 25 extends from the inlet 23 to the outlet 24. As shown in FIG. 2, the target hole 20 is elongated along the X direction as viewed from the upper side.

As shown in FIG. 1, the target hole 20 has a curved portion 210. The target hole 20 does not have a support structure. The curved portion 210 is curved from the inlet 23 to the outlet 24. The entire target hole 20 is the curved portion 210. The curved portion 210 is curved such that the outlet 24 is visible from the inlet 23. The curved portion 210 includes an inner side surface 211 and an outer side surface 212. The inner side surface 211 is an inner peripheral side (right side in FIG. 1) of the curved portion 210. The outer side surface 212 is an outer peripheral side (left side in FIG. 1) of the curved portion 210. As shown in FIG. 1, on a plane orthogonal to the X direction, a tangent line T passing through an end portion of the inner side surface 211 on the outlet 24 side extends in the vertical direction.

In the target hole 20, an ejection axis 30 is defined as follows. The ejection axis 30 is defined in a cross section of the target hole 20 orthogonal to the X direction. As shown in FIG. 1, the ejection axis 30 is a straight line extending from the outside of the target hole 20 to the inside through the inlet 23. The ejection axis 30 has a portion closer to the inner side surface 211 on the outlet 24 side than on the inlet 23 side of the target hole 20. At least at the end of the target hole 20 on the outlet 24 side, the ejection axis 30 passes closer to the inner side surface 211 than the outer side surface 212. The ejection axis 30 extends along the inner side surface 211 at the end of the target hole 20 on the outlet 24 side. The ejection axis 30 extends vertically downward.

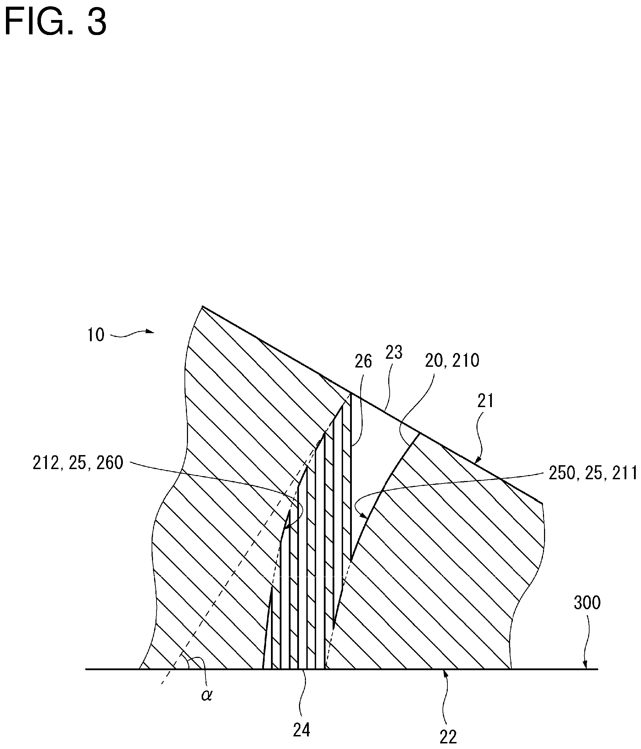

First, the workpiece 10 is shaped by additive manufacturing. As shown in FIG. 3, a material is laminated from below on a base surface 300, and the lower surface 22 is in contact with the base surface 300. At the time of shaping, a surface of the side surfaces 25 of the target hole 20 facing upward is referred to as an up skin surface 250, and a surface of the side surfaces 25 of the target hole 20 facing downward is referred to as a down skin surface 260. The up skin surface 250 includes the inner side surface 211. The down skin surface 260 includes the outer side surface 212. An inclination angle α of the down skin surface 260 with respect to the horizontal direction is minimal at the end of the inlet 23. The inclination angle α is equal to or greater than 45 degrees. At the time of shaping, the support structure 26 may be shaped inside the target hole 20. The support structure 26 is an elongated rod shape extending in the vertical direction. The support structure 26 extends from the base surface 300 or the up skin surface 250 to the down skin surface 260.

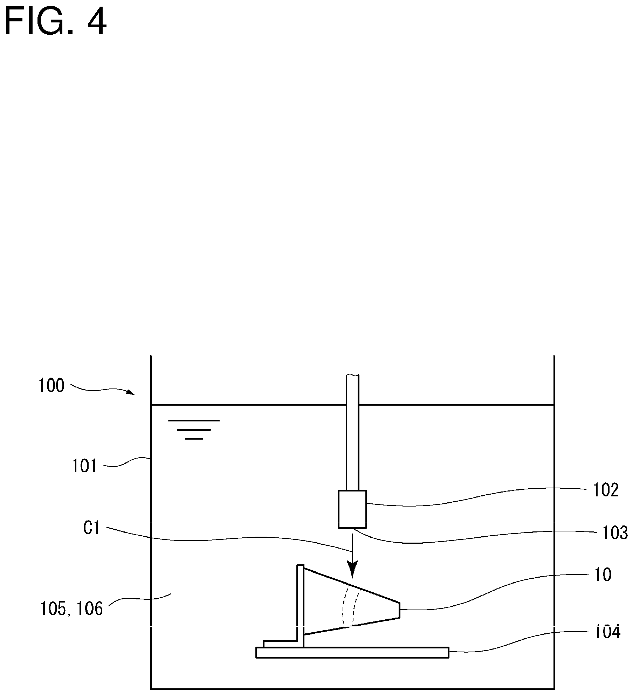

Next, a cavitation processing apparatus for cavitation processing will be described. As shown in FIG. 4, a cavitation processing apparatus 100 includes a tank 101, the nozzle 102, a fixing base 104, and a high-pressure fluid supply source (not shown).

The tank 101 stores the processing liquid 105. The processing liquid 105 is, for example, water. The processing liquid 105 is obtained by suspending the abrasives 106. The tank 101 may include a device for circulating the stored processing liquid 105.

The nozzle 102 is connected to the high-pressure fluid supply source. The nozzle 102 has an ejection port 103. The ejection port 103 faces vertically downward. The nozzle 102 ejects a jet C1 of the processing liquid 105 vertically downward from the ejection port 103. The jet C1 is a linear rod-shaped jet. The jet C1 includes lots of cavities. The nozzle 102 can move in three axial directions in the horizontal direction (the front-rear direction and the left-right direction) and the vertical direction. The ejection velocity (pressure) of the jet C1 and the three-axis movement of the nozzle 102 are controlled by a control device (not shown).

The fixing base 104 fixes the workpiece 10. The workpiece 10 is fixed to the fixing base 104 by fasteners (not shown) such as bolts and clamps. The fixing base 104 is movable in the vertical direction. The workpiece 10 is moved in and out of the tank 101 by the vertical movement of the fixing base 104. The vertical movement of the fixing base 104 is controlled by a control device (not shown).

The cavitation processing apparatus 100 can eject the jet C1 at any position of the workpiece 10 from any distance.

Subsequently, the workpiece 10 and the nozzle 102 are immersed in the processing liquid 105 in which the abrasives 106 are suspended.

First, the workpiece 10 is fixed to the fixing base 104. The workpiece 10 is fixed in a posture in which the inlet 23 of the target hole 20 faces upward and the end portion of the inner side surface 211 on the outlet 24 side is parallel to the vertical direction.

Next, the workpiece 10 is immersed in the processing liquid 105 stored in the tank 101 by moving the fixing base 104 downward.

Next, the nozzle 102 is moved so as to be immersed in the processing liquid 105, and an ejection direction of the jet C1 is aligned with the ejection axis 30. The nozzle 102 is located above the target hole 20. The position of the nozzle 102 in the X direction is a position opposed to the end portion of the target hole 20 in the X direction.

Subsequently, the support structure 26 is removed by cavitation processing.

First, the high-pressure fluid supply source is activated to eject the jet C1 from the ejection port 103 of the nozzle 102 along the ejection axis 30, as shown in FIG. 1. Preferably, the jet C1 is a linear rod-shaped jet.

The jet C1 includes lots of cavities. The jet C1 entrains the abrasives 106 and impinges on the support structure 26 and the side surface 25 of the target hole 20. The abrasives 106 contained in the jet C1 causes the support structure 26 to be folded or scraped off. After the support structure 26 is removed, the side surface 25 is smoothed by the abrasives 106 contained in the jet C1. The side surface 25 is peened by the impact force when the cavity included in the jet C1 collapses. The peening process imparts compressive residual stress to the side surface 25.

Next, as shown in FIG. 2, the nozzle 102 is moved along the X direction in conformity with the shape of the target hole 20 while the jet C1 is ejected. This allows the jet C1 to reach the entire area inside the target hole 20. Preferably, the nozzle 102 is moved while the jet C1 is ejected, as shown by the arrow A1.

In this way, the jet C1 removes the support structure 26 across the entire area inside the target hole 20. At the same time, the jet C1 smoothes and peens the inner side surface 211 and the outer side surface 212 of the target hole 20.

As described above, in the present embodiment, the workpiece 10 is shaped by additive manufacturing, and the support structure 26 formed at that time is removed by cavitation processing to form a product. In the cavitation processing, by bringing the ejection axis 30 close to the inner side surface 211 of the curved portion 210, the abrasives 106 widely reaches, and the area where the jet C1 acts is not biased toward the outer periphery of the curved portion 210, so that the entire area inside the target hole 20 can be appropriately processed.

In the present embodiment, the ejection axis 30 is along the inner side surface 211 at the end portion of the target hole 20 on the outlet 24 side. This promotes the peening processing of the region on the inner peripheral side of the curved portion 210. If the ejection axis 30 is vertically downward, it is not affected by gravitational force, and the jet C1 easily reaches a target position. When the jet C1 is a linear rod-shaped jet, the dynamic pressure of the jet C1 increases. This promotes the breakage and removal of the support structure 26. As the jet C1 has a linear rod shape, the side surface 25 is less likely to be deformed.

### Second Embodiment

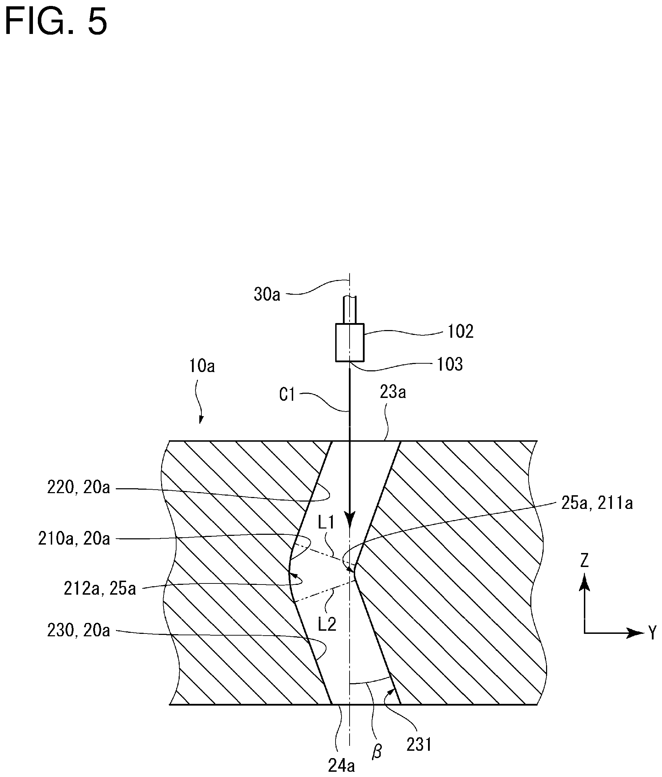

The cavitation processing method according to a second embodiment will be described. The present embodiment differs from the first embodiment in the shapes of a workpiece 10a. As shown in FIG. 5, the workpiece 10a of the present embodiment has a single target hole 20a. The target hole 20a has a circular cross-section. The target hole 20a has an inlet 23a, an outlet 24a, and a side surface 25a. The target hole 20a includes an upper straight portion 220, a curved portion 210a, and a lower straight portion 230. The upper straight portion 220 extends linearly in an obliquely downward direction (a leftward downward direction in FIG. 5) inclined from the inlet 23a to -Y direction. The curved portion 210a is curved in an obliquely downward direction (a rightward downward direction in FIG. 5) inclined in the +Y direction from the lower end of the upper straight portion 220. The lower straight portion 230 extends linearly from the lower end of the curved portion 210a to the outlet 24a in an obliquely downward direction (a rightward downward direction in FIG. 5) inclined in the +Y direction. In FIG. 5, the line segment L1 indicates a border between the upper straight portion 220 and the curved portion 210a. The line segment L2 indicates a border between the curved portion 210a and the lower straight portion 230. The curved portion 210a includes an inner side surface 211a and an outer side surface 212a. The lower straight portion 230 has a lower inner surface 231. The lower inner surface 231 is a surface that is connected to the inner side surface 211a.

As shown in FIG. 5, the ejection axis 30a is defined in a cross section passing through the central axis of the target hole 20a. The ejection axis 30a has at least a portion that is closer to the inner side surface 211a than the outer side surface 212a of the curved portion 210a. The ejection axis 30a extends along the inner side surface 211a at the outlet 24a side from the end of the inlet 23a of the curved portion 210a. The ejection axis 30a passes through the inlet 23a. The angle β between the ejection axis 30a and the lower inner surface 231 is preferably as small as possible. The ejection axis 30a may be a straight line that enters the target hole 20a from the inlet 23a and exits to the outlet 24a. The ejection axis 30a may be a straight line that enters the target hole 20a from the inlet 23a and intersects the side surface 25 of the target hole 20a.

Also in the present embodiment, the cavitation processing apparatus 100 substantially the same as that of the first embodiment is used. The step of the cavitation processing method according to the present embodiment is different from that of the first embodiment only in that the nozzle 102 is not moved in the X direction.

### Reference Signs List

- 10, 10a: Workpiece

- 20, 20a: Target hole
- 25, 25a: Side surface
- 30, 30a: Ejection axis
- 102: Nozzle
- 103: Ejection port
- 105: Processing liquid
- 106: Abrasive
- 210, 210a: Curved portion
- 211, 211a: Inner side surface
- C1: Jet

## Claims

1. A cavitation processing method, comprising:
forming a workpiece (10, 10a) by additive manufacturing, the workpiece (10, 10a) having a target hole (20, 20a);
immersing the workpiece (10, 10a) and a nozzle (102) having an ejection port (103) in processing liquid (105) containing suspended abrasives (106);
ejecting a jet (C1) of the processing liquid (105) containing cavities from the ejection port (103) along an ejection axis (30);
and performing cavitation processing on an inside of the target hole (20, 20a) by the jet (C1);
**characterised in that**
the target hole (20, 20a) has a curved portion (210, 210a) curved from an inlet (23, 23a) to an outlet (24, 24a); **in that**
the ejection axis (30) is a straight line extending from outside to inside of the target hole (20, 20a); and **in that**
the ejection axis (30) is a straight line having a portion closer to the outlet (24, 24a) side than the inlet (23, 23a) of the target hole (20, 20a) with respect to an inner side surface (211, 211a), the inner side surface (211, 211a) being an inner peripheral surface of the curved portion (210, 210a) among side surfaces (25) of the target hole (20, 20a).

2. The cavitation processing method according to claim 1, wherein
the ejection axis (30) extends to a back side of the inner side surface (211, 211a).

3. The cavitation processing method according to claim 1 or 2, wherein
the jet (C1) is a linear rod-shaped jet.

4. The cavitation processing method according to any one of claims 1 to 3, wherein
the ejection axis (30) extends in a vertically downward direction.

5. The cavitation processing method according to any one of claims 1 to 4, wherein
the workpiece (10) includes a support structure (26) supporting the side surface (25) inside the target hole (20),
the cavitation processing method further comprising:
removing the support structure (26) by the jet (C1).

6. The cavitation processing method according to any one of claims 1 to 5, wherein
a minimum inclination angle of a surface of the side surfaces (25) of the target hole (20) facing downward with respect to a horizontal direction is equal to or greater than 45 degrees at a time of forming the workpiece (10).

## Patentansprüche

1. Kavitationsbearbeitungsverfahren, das aufweist:
Bilden eines Werkstücks (10, 10a) durch additive Fertigung, wobei das Werkstück (10, 10a) ein Zielloch (20, 20a) aufweist;
Eintauchen des Werkstücks (10, 10a) und einer Düse (102) mit einer Ausstoßöffnung (103) in eine Bearbeitungsflüssigkeit (105), die suspendierte Schleifmittel (106) enthält;
Ausstoßen eines Strahls (C1) der Bearbeitungsflüssigkeit (105), die Gasblasen enthält, aus der Ausstoßöffnung (103) entlang einer Ausstoßachse (30);
Durchführen einer Kavitationsbearbeitung an einer Innenseite des Ziellochs (20, 20a) mittels des Strahls (C1);
**dadurch gekennzeichnet, dass**
das Zielloch (20, 20a) einen gekrümmten Abschnitt (210, 210a) aufweist, der von einem Einlass (23, 23a) zu einem Auslass (24, 24a) gekrümmt ist; dass
die Ausstoßachse (30) eine gerade Linie ist, die sich von der Außenseite zur Innenseite des Ziellochs (20, 20a) erstreckt; und dass
die Ausstoßachse (30) eine gerade Linie ist, die einen Abschnitt aufweist, der näher an der Seite des Auslasses (24, 24a) liegt als der Einlass (23, 23a) des Ziellochs (20, 20a) in Bezug auf eine Innenseitenfläche, wobei die Innenseitenfläche (211, 211a) eine Innenumfangsfläche des gekrümmten Abschnitts (210, 210a) unter den Seitenflächen (25) des Ziellochs (20, 20a) ist.

2. Kavitationsbearbeitungsverfahren nach Anspruch 1, wobei
sich die Ausstoßachse (30) bis zu einer Rückseite der Innenseitenfläche (211, 211a) erstreckt.

3. Kavitationsbearbeitungsverfahren nach Anspruch 1 oder 2, wobei
der Strahl (C1) ein linearer, stabförmiger Strahl ist.

4. Kavitationsbearbeitungsverfahren nach einem der Ansprüche 1 bis 3, wobei sich die Ausstoßachse (30) in einer vertikalen Abwärtsrichtung erstreckt.

5. Kavitationsbearbeitungsverfahren nach einem der Ansprüche 1 bis 4, wobei
das Werkstück (10) eine Stützstruktur (26) aufweist, die die Seitenfläche (25) innerhalb des Ziellochs (20) stützt,
wobei das Kavitationsbearbeitungsverfahren ferner aufweist:
Entfernen der Stützstruktur (26) durch den Strahl (C1).

6. Kavitationsbearbeitungsverfahren nach einem der Ansprüche 1 bis 5, wobei ein minimaler Neigungswinkel einer Oberfläche der Seitenflächen (25) des Ziellochs (20), die in Bezug auf eine horizontale Richtung nach unten weisen, zum Zeitpunkt des Bildens des Werkstücks (10) gleich oder größer als 45 Grad ist.

## Revendications

1. Procédé de traitement par cavitation, comprenant :
la formation d'une pièce (10, 10a) par fabrication additive, ladite pièce (10, 10a) présentant un trou cible (20, 20a) ;
l'immersion de la pièce (10, 10a) et d'une buse (102) présentant un orifice de projection (103) dans un liquide de traitement (105) contenant des abrasifs en suspension (106) ;
la projection d'un jet (C1) du liquide de traitement (105) contenant des cavités depuis l'orifice de projection (103) le long d'un axe de projection (30) ;
l'exécution d'un traitement par cavitation à l'intérieur du trou cible (20, 20a) au moyen du jet (C1) ;
**caractérisé en ce que**
le trou cible (20, 20a) présente une partie incurvée (210, 210a) s'étendant de manière courbe depuis une entrée (23, 23a) jusqu'à une sortie (24, 24a) ; **en ce que**
l'axe de projection (30) est une ligne droite s'étendant de l'extérieur vers l'intérieur du trou cible (20, 20a) ; et **en ce que**
l'axe de projection (30) est une ligne droite comportant une partie plus proche du côté de sortie (24, 24a) que de l'entrée (23, 23a) du trou cible (20, 20a) par rapport à une surface latérale intérieure (211, 211a), ladite surface latérale intérieure (211, 211a) étant une surface périphérique intérieure de la partie incurvée (210, 210a) parmi les surfaces latérales (25) du trou cible (20, 20a).

2. Procédé de traitement par cavitation selon la revendication 1, où
l'axe de projection (30) s'étend vers un côté arrière de la surface latérale intérieure (211, 211a).

3. Procédé de traitement par cavitation selon la revendication 1 ou la revendication 2, où
le jet (C1) est un jet linéaire en forme de tige.

4. Procédé de traitement par cavitation selon l'une des revendications 1 à 3, où l'axe de projection (30) s'étend verticalement vers le bas.

5. Procédé de traitement par cavitation selon l'une des revendications 1 à 4, où
la pièce (10) comprend une structure de support (26) supportant la surface latérale (25) à l'intérieur du trou cible (20),
ledit procédé de traitement par cavitation comprenant en outre :
l'enlèvement de la structure de support (26) par le jet (C1).

6. Procédé de traitement par cavitation selon l'une des revendications 1 à 5, où l'angle d'inclinaison minimal d'une surface parmi les surfaces latérales (25) du trou cible (20) dirigées vers le bas par rapport à la direction horizontale est égal ou supérieur à 45 degrés au moment de la formation de la pièce (10).
